# EUROPEAN PATENT SPECIFICATION

(11) **EP 2 610 214 B1**
(45) Date of publication and mention of the grant of the patent: **03.05.2017**
(21) Application number: 11195919.3
(22) Date of filing: 28.12.2011
(51) Int. Cl.: C01B 7/01, C01B 7/03, C01B 9/02, C01B 21/30, C01B 21/40, C01C 1/02, C01B 21/48, C01F 5/04, C01F 5/14, C01F 11/02, C01B 13/02

(54) **Method for converting nitrogen (N2) into ammonia and/or nitric acid**
Verfahren zum Umwandeln von Stickstoff (N2) in Ammoniak und/oder Salpetersäure
Procédé de conversion d'azote (N2) en ammoniac et/ou acide nitrique

(43) Date of publication of application: 03.07.2013
(73) Proprietor: King Saud University, 11421 Riyadh (SA)
(72) Inventor: Ba-abbad, Mazen Abdullah, 11442 Riyadh (SA); Al-Ansary, Hany, 11421 Riyadh (SA); Al-Ammar, Essam, 11421 Riyadh (SA)
(74) Representative: Scholz, Volker

(56) References cited:
- DE-A1- 19 823 748
- US-A- 829 874
- L MOSER ET AL: "Die Darstellung von reinem Ammoniak", MONATSHEFTE FUER CHEMIE, vol. 44, 1 January 1923 (1923-01-01), pages 115-122, XP55022893,
- VINSON ET AL: "Air separation control technology", COMPUTERS & CHEMICAL ENGINEERING, PERGAMON PRESS, OXFORD, GB, vol. 30, no. 10-12, 12 September 2006 (2006-09-12), pages 1436-1446, XP025089005, ISSN: 0098-1354, DOI: 10.1016/J.COMPCHEMENG.2006.05.038 [retrieved on 2006-09-12]
- EGELAND ET AL: "Kristian Birkeland: The first space scientist", JOURNAL OF ATMOSPHERIC AND SOLAR-TERRESTRIAL PHYSICS, PERGAMON, AMSTERDAM, NL, vol. 71, no. 17-18, 1 December 2009 (2009-12-01), pages 1749-1755, XP026784474, ISSN: 1364-6826, DOI: 10.1016/J.JASTP.2009.09.008 [retrieved on 2009-10-04]

## Description

The present invention relates to a method for conversion of nitrogen (N₂) into nitric acid and/or ammonia, which can both be used as fertilizer.

Several methods are known in the art to use gaseous components, especially carbon dioxide, for conversion into suitable hydrocarbon materials.

US 7,605,293 B2 discloses a method of reducing the carbon dioxide content of the atmosphere by recycling carbon dioxide and producing methanol using a reductive conversion of an available source of carbon dioxide that is present in or would otherwise be discharged into the atmosphere.

US 7,596,952 B2 discloses a process for recycling carbon dioxide emissions from a fossil-fuel power plant into useful carbonated species, wherein the process comprises the steps of burning the fossil fuel, thereby generating heat and a hot exhaust gas containing carbon dioxide, and converting the heat into energy. This process is further characterized in that it comprises the steps of cooling the exhaust gas and biologically transforming the carbon dioxide contained in the cooled exhaust gas into carbonated species.

US 7,459,590 B2 discloses a method for producing methanol and dimethyl ether using the air as the sole source of materials. The method is related to producing methanol by removing water from atmospheric air, obtaining hydrogen from the removed water, obtaining carbon dioxide from atmospheric air; and converting the carbon dioxide under conditions sufficient to produce methanol.

Further, US 6,375,832 B1 discloses a method of transforming a normally gaseous composition containing at least one hydrogen source, at least one oxygen source and at least one carbon source into a normally liquid fuel, wherein said gaseous composition consists at least in part of carbon dioxide as said carbon source and said oxygen source, and of methane as said hydrogen source and as a second carbon source.

One disadvantage of the methods known in the art is that they are more or less silent in the use of N₂ which is one of the components of ambient air, and that, if renewable energy, such as solar or wind energy, is utilized, the methods may not work efficiently, especially if solar wind energy is fluctuating or interrupted. Also, the known methods do not have forms of process energy recovery, i.e. thermal or photonic. Additionally, these methods may consume large amounts of fresh water, which is not widely available in many parts of the world. Also, the prior art methods may require complicated process controls and very expensive process equipment.

L. Moser et al., "Die Darstellung von reinem Ammoniak", Monatshefte für Chemie, vol. 44, pages 115 - 122, discloses a process for the production of ammonia comprising providing nitrogen from a nitrogen cylinder, freeing it from the remaining oxygen traces and bringing it to reaction with a magnesium powder brought to a red heat in order to synthesize Mg₃N₂, and reacting said magnesium nitride with water in order to produce Mg(OH)₂ and NH₃.

Vinson et al., "Air separation control technology", Computers & Chemical Engineering, Pergamon Press, Oxford, vol. 30, no. 10 - 12, pages 1436 - 1446, discloses air separation processes which present particular challenges because of their energy intensive nature and demanding production schedules. The separation of nitrogen from air is disclosed using cryogenic processes.

It is therefore an object of the present invention to provide a method for conversion of nitrogen (N₂) into suitable fertilizer starting materials or fertilizer as such which overcomes the difficulties and disadvantages of the prior art.

This object is achieved by a method for converting nitrogen (N₂) into nitric acid and/or ammonia comprising the steps:
a) compressing air, optionally under removal of condensed water vapor, to a pressure of about 50 atmospheres, cooling the compressed air, preferably to about ambient temperature, separating oxygen (O₂) and nitrogen (N₂) from carbon dioxide (CO₂), storing N₂ and O₂ in a storage tank and preferably storing the heat generated during compression and/or cooling in a heat storage medium;
   and either
b1) reacting oxygen with earth alkaline metal Me, preferably Mg and/or Ca, according to the following equation:

   2 Me + O₂ → 2 MeO
c1) using the temperature released in step b1) to further react N₂ and O₂ according to the following equations:

   N₂ + O₂ → 2 NO

   2 NO + O₂ → 2 NO₂

   3 NO₂ + H₂O → 2 HNO₃ + NO

   and/or
b2) reacting N₂ obtained in step a) with earth alkaline metal Me, preferably Mg and/or Ca, according to the following equations:

   3 Me + N₂ → Me₃N₂

   Me₃N₂ + 6 H₂O → 3 Me(OH)₂ + 2 NH₃.

   wherein the earth alkaline metal hydroxides obtained in step b2) are at least partly reacted with nitric acid obtained in step c1) and/or the earth alkaline metal hydroxides obtained in step b2) are at least partly reacted with hydrochloric acid according to the following equation

   Me(OH)₂ + 2 HCl → MeCl₂ + 2 H₂O

   wherein the earth alkaline metal chloride is then heated to its melting temperature and electrolyzed

   MeCl₂ → Me + Cl₂,

   wherein optionally hydrochloric acid is then prepared by reacting the chlorine gas with hydrogen gas according to the following formula:

   H₂ + Cl₂ → 2 HCl.

In a preferred embodiment the earth alkaline metal is in the form of powder or billets.

Even preferred, an intense light glow obtained in the reaction in step b1) is transferred to photovoltaic cells for production of electricity.

Preferably the NO obtained in step c1) is heat exchanged with the compressed air used in step a), the compressed air is then expanded in a gas turbine that turns an electrical generator.

Preferred, step b2) is carried out at a temperature of about 600 - 1.000°C.

Preferably, hot chlorine gas obtained is heat exchanged with compressed air of step a) which is then expanded in a gas turbine that turns an electrical generator, prior to recycling the chlorine gas to prepare hydrochloric acid.

Surprisingly, it was found that the present invention provides a new method to convert atmospheric nitrogen (N₂) from air into useful fertilizer starting materials or fertilizer materials as such. The inventive method consumes only energy which can preferably come from renewable resources. The inventive method is much more economic with renewable energy forms that are fluctuating and require energy storage, for example solar and wind energy. Additionally, the inventive method provides higher efficiency than other methods, as most of the process heat, photonic emissions and cooling effects (decompression cooling) can be recovered and recycled into the system. Also this method has a net effect of producing oxygen. All this is done in a simple way.

During air compression, the heat generated is preferably extracted and stored in hot fluid medium to be used later to pre-heat gases in processes and in turbine expansion to generate electricity; and chemical reactors that are coupled with energy recovery subsystems for thermal and photonic recovery.

The only core method inputs are nitrogen, oxygen, heat and electricity. Earth alkaline metal, water and chlorine gas are substances utilized in the method which can be preferably fully recycled.

The inventive method is very flexible and can be easily controlled to produce a variety of valuable fertilizer products.

Further, it shall be highlighted that there are no harmful rejects to the environment.

### Detailed description of the invention

### Step a)

Preferably using renewable energy sources, air is compressed, preferably in multiple stages, until the final pressure is above 50 atmospheres. Preferably, during the first stages of compression condensed water vapor is removed. During compression a separation into carbon dioxide on the one hand and oxygen (O₂) and nitrogen (N₂) on the other hand can be achieved, wherein oxygen and nitrogen can be transferred to a separate storage tank. In all stages of compression, the compressed gases are preferably cooled to ambient temperature, and the heat released is then preferably stored in a heat storage medium, such as hot oil, molten salt, etc. This stored heat in each medium should preferably match with process heat requirements needed during the inventive method.

### Step b1)

Oxygen separated from the compressed air is reacted with earth alkaline metal, preferably Mg and/or Ca. This reaction can be for example done using a tray holding the earth alkaline metals, the tray having gas flow holes through which oxygen can flow. Preferably, each metal, if a mixture of earth alkaline metals is utilized, is contained separately in the tray.

The reaction of oxygen with earth alkaline metal results in the production of earth alkaline metal oxide (MeO).

This reaction is highly exothermic and provides a very high temperature of higher then 2.500°C, in addition to a very high intensity light which allows the use of photovoltaic cells to generate electricity.

### Step c1)

The high temperature obtained in the reaction of step b1) will enable the reaction of nitrogen and oxygen to produce nitrogen monoxide, which requires temperatures of above 2.000°C.

The nitrogen monoxide obtained can react with further oxygen to prepare nitrogen dioxide which is then converted with water to obtain nitric acid and nitrogen monoxide.

The nitrogen monoxide obtained finally is a very hot gas which can be heat exchanged, for example, with the compressed air prepared in step 1 which can then be expanded in a turbine to turn an electrical generator.

### Step b2)

In an alternative, nitrogen obtained from the separation of step a) can be also reacted with earth alkaline metal to result in the production of earth alkaline metal nitrides which are then converted with water to ammonia and the respective earth alkaline metal hydroxide.

The earth alkaline metal hydroxide can be either reacted with nitric acid obtained in step c1), or can be recycled by reaction with hydrochloric acid to prepare earth alkaline metal chloride and water, and then melting the earth alkaline metal chloride and electrolyzing thereof to obtain the earth alkaline pure metal and chlorine gas which can be recycled by use of hydrogen gas to hydrochloric acid.

Further, it is preferred that hot chlorine gas obtained in this recycling step is allowed to heat exchange with compressed air which is then again expanded in a turbine to turn an electrical generator before the cooled chlorine gas may be recycled as illustrated above.

The features disclosed in the foregoing description and in the claims may, both separately and in any combination thereof, be material for realizing the invention in diverse forms thereof.

## Claims

1. Method for converting nitrogen (N₂) into nitric acid and/or ammonia comprising the steps:
a) compressing air, optionally under removal of condensed water vapor, to a pressure of about 50 atmospheres, cooling the compressed air, preferably to about ambient temperature, separating oxygen (O₂) and nitrogen (N₂) from carbon dioxide (CO₂), storing N₂ and O₂ in a storage tank and preferably storing the heat generated during compression and/or cooling in a heat storage medium;
and either
b1) reacting oxygen with earth alkaline metal Me, preferably Mg and/or Ca, according to the following equation:
2 Me + O₂ → 2 MeO
c1) using the temperature released in step b1) to further react N₂ and O₂ according to the following equations:
N₂ + O₂ → 2 NO
2 NO + O₂ → 2 NO₂
3 NO₂ + H₂O → 2 HNO₃ + NO
and/or
b2) reacting N₂ obtained in step a) with earth alkaline metal Me, preferably Mg and/or Ca, according to the following equations:
3 Me + N₂ → Me₃N₂
Me₃N₂ + 6 H₂O → 3 Me(OH)₂ + 2 NH₃,
wherein the earth alkaline metal hydroxides obtained in step b2) are at least partly reacted with nitric acid obtained in step c1) and/or the earth alkaline metal hydroxides obtained in step b2) are at least partly reacted with hydrochloric acid according to the following equation
Me(OH)₂ + 2 HCl → MeCl₂ + 2 H₂O
wherein the earth alkaline metal chloride is then heated to its melting temperature and electrolyzed
MeCl₂ → Me + Cl₂,
wherein optionally hydrochloric acid is then prepared by reacting the chlorine gas with hydrogen gas according to the following formula:
H₂ + Cl₂ → 2 HCl.

2. Method according to claim 1, wherein the earth alkaline metal is in the form of powder or billets.

3. Method according to claim 1 or 2, wherein an intense light glow obtained in the reaction in step b1) is transferred to photovoltaic cells for production of electricity.

4. Method according to any of the preceding claims, wherein the NO obtained in step c1) is heat exchanged with the compressed air used in step a), the compressed air is then expanded in a gas turbine that turns an electrical generator.

5. Method according to any of the preceding claims, wherein step b2) is carried out at a temperature of about 600 - 1.000°C.

6. Method according to claim 1, wherein hot chlorine gas obtained is heat exchanged with compressed air of step a) which is then expanded in a gas turbine that turns an electrical generator, prior to recycling the chlorine gas to prepare hydrochloric acid.

## Patentansprüche

1. Verfahren zum Umwandeln von Stickstoff (N₂) in Salpetersäure und/oder Ammoniak, umfassend die Schritte:
a) Komprimieren von Luft, optional unter Entfernung von kondensiertem Wasserdampf, auf einen Druck von etwa 50 Atmosphären, Kühlen der komprimierten Luft, bevorzugt auf etwa Umgebungstemperatur, Abtrennen von Sauerstoff (O₂) und Stickstoff (N₂) von Kohlendioxid (CO₂), Speichern von N₂ und O₂ in einem Vorratstank und bevorzugt Speichern der während der Komprimierung und/oder des Kühlens erzeugten Wärm in einem Wärmespeichermedium;
und entweder
b1) Umsetzen von Sauerstoff mit Erdalkalimetall Me, bevorzugt Mg und/oder Ca, gemäß der folgenden Gleichung:
₂ Me + O₂ → 2 MeO
C1) Verwenden der in Schritt b1) freigesetzten Temperatur, um N₂ und O₂ gemäß den folgenden Gleichungen weiter umzusetzen:
N₂ + O₂ → 2 NO
2 NO + O₂ → 2 NO₂
₃ NO₂ + H₂O → 2 HNO₃ + NO
und/oder
b2) Umsetzen des in Schritt a) erhaltenen N₂ mit Erdalkalimetall Me, bevorzugt Mg und/oder Ca, gemäß den folgenden Gleichungen:
3 Me + N₂ → Me₃N₂
Me₃N₂ + 6 H₂O → 3 Me(OH)₂ + 2 NH₃,
wobei die in Schritt b2) erhaltenen Erdalkalimetallhydroxide wenigstens teilweise umgesetzt werden mit in Schritt c1) erhaltener Salpetersäure und/oder die in Schritt b2) erhaltenen Erdalkalimetallhydroxide wenigstens teilweise umgesetzt werden mit Salzsäure gemäß der folgenden Glecihung:
Me(OH)₂ + 2 HCl → MeCl₂ + 2 H₂O,
wobei das Erdalkalimetallchlorid dann auf seine Schmelztemperatur erwärmt und elektrolysiert wird:
MeCl₂ → Me + Cl₂,
wobei optional Salzsäure dann hergestellt wird durch Umsetzen des Chlorgases mit Wasserstoffgas gemäß der folgenden Formel:
H₂ + Cl₂ → 2 HCl.

2. Verfahren nach Anspruch 1, wobei das Erdalkalimetall in der Form eines Pulvers oder eines Barrens ist.

3. Verfahren nach Anspruch 1 oder 2, wobei ein intensives Lichtleuchten, das in Schritt b) erhalten wird, zu Photovoltaikzellen zur Erzeugung von Elektrizität überfährt wird.

4. Verfahren nach einem der vorangehenden Ansprüche, wobei das in Schritt c1) erhaltene NO mit in Schritt a) verwendeter komprimierter Luft wärmeausgetauscht wird, wobei die komprimierte Luft dann in einer Gasturbine expandiert wird, die einen elektrischen Generator antreibt.

5. Verfahren nach einem der vorangehenden Ansprüche, wobei Schritt b2) bei einer Temperatur von etwa 600-1.000°C durchgeführt wird.

6. Verfahren nach Anspruch 1, wobei erhaltenes Chlorgas mit komprimierter Luft aus Schritt a) wärmeausgetauscht wird, welches dann in einer Gasturbine expandiert wird, das einen elektrischen Generator antreibt, vor dem Recyclieren des Chlorgases, um Salzsäure herzustellen.

## Revendications

1. Procédé de conversion d'azote (N2) en acide nitrique et/ou en ammoniac comprenant les étapes consistant à :
a) comprimer de l'air, éventuellement en éliminant la vapeur d'eau condensée, jusqu'à une pression d'environ 50 atmosphères, refroidir l'air comprimé, de préférence jusqu'à environ la température ambiante, séparer l'oxygène (O₂) et l'azote (N₂) du dioxyde de carbone (CO₂), stocker le N₂ et le O₂ dans un réservoir de stockage et de préférence stocker la chaleur générée durant la compression et/ou le refroidissement dans un milieu de stockage de chaleur ;
et soit
b1) faire réagir l'oxygène avec un métal alcalino-terreux Me, de préférence Mg et/ou Ca, selon l'équation suivante :
2 Me + O₂ →2 MeO
c1) utiliser la température dégagée à l'étape b1) pour faire réagir davantage le N₂ et l'O₂ selon les équations suivantes :
N₂ + O₂ → 2 NO
2 NO + O₂ → 2 NO₂
3 NO₂ + H₂O → 2 HNO₃ + NO
et/soit
b2) faire réagir le N₂ obtenu à l'étape a) avec le métal alcalino-terreux Me, de préférence Mg et/ou Ca, selon les équations suivantes
3 Me + N₂ → Me₃N₂
Me₃N₂ + 6 H₂O → 3 Me(OH)₂ + 2 NH₃,
dans lequel les hydroxydes de métal alcalino-terreux obtenus à l'étape b2) sont au moins partiellement mis à réagir avec l'acide nitrique obtenu à l'étape c1) et/ou les hydroxydes de métal alcalino-terreux obtenus à l'étape b2) sont au moins partiellement mis à réagir avec l'acide chlorhydrique selon l'équation suivante
Me(OH)₂ + 2 HCl → MeCl₂ + 2 H₂O
dans lequel le chlorure de métal alcalino-terreux est ensuite chauffé jusqu'à sa température de fusion et électrolysé
MeCl₂ → Me + Cl₂,
dans lequel l'acide chlorhydrique est ensuite éventuellement préparé en mettant en réaction le gaz de chlore avec du gaz d'hydrogène selon la formule suivante :
H₂ + Cl₂ → 2 HCl.

2. Procédé selon la revendication 1, dans lequel le métal alcalino-terreux se présente sous la forme de poudre ou de billettes.

3. Procédé selon la revendication 1 ou la revendication 2, dans lequel une luminosité intense obtenue à la réaction de l'étape b1) est transférée à des cellules photovoltaïques pour la production d'électricité.

4. Procédé selon l'une quelconque des revendications précédentes, dans lequel le NO obtenu à l'étape c1) fait l'objet d'un échange de chaleur avec l'air comprimé utilisé à l'étape a), l'air comprimé étant ensuite détendu dans une turbine à gaz qui fait fonctionner un générateur électrique.

5. Procédé selon l'une quelconque des revendications précédentes, dans lequel l'étape b2) est effectuée à une température d'environ 600 à 1 000 °C.

6. Procédé selon la revendication 1, dans lequel le gaz de chlore chaud obtenu fait l'objet d'un échange de chaleur avec l'air comprimé de l'étape a) qui est ensuite détendu dans une turbine à gaz qui fait fonctionner un générateur électrique, avant le recyclage du gaz de chlore dans le but de préparer de l'acide chlorhydrique.
